# EUROPÄISCHE PATENTANMELDUNG

(11) **EP 1 134 997 A1**
(43) Veröffentlichungstag der Anmeldung: **19.09.2001**
(21) Anmeldenummer: 01440051.9
(22) Anmeldetag: 28.02.2001
(51) Int. Cl.: H04Q 7/38

(54) **Bildung von Endgerätegruppen in einem Mobilfunk-Telekommunikationsnetz**

(30) Priorität: 16.03.2000 DE 10012945
(71) Anmelder: ALCATEL, 75008 Paris (FR)
(72) Erfinder: Wilhelm, Michael, 71665 Vaihingen/Enz-3 (DE)
(74) Vertreter: Brose, Gerhard

(57) **Zusammenfassung**

Die vorliegende Erfindung betrifft ein Verfahren von eines ersten und zumindest eines zweiten Mobilfunk-Endgeräts (M1, M2), die über ein Mobilfunk-Telekommunikationsnetz (NET) jeweils Verbindungen zu Kommunikationspartner-Endgeräten (KPM1, KPM2, KPM3) aufbauen können, sowie eine Vorrichtung hierfür, ein Programm-Modul für eine Vorrichtung hierfür, ein Mobilfunk-Endgerät hierfür, ein Programm-Modul für ein Mobilfunk-Endgerät hierfür und ein Identifizierungsmodul für ein Mobilfunk-Endgerät hierfür.

Das erste und das zumindest eine zweite Endgerät (M1, M2) werden einer gemeinsamen Mobilfunk-Endgerätegruppe (GRP) zugeordnet, der eine gemeinsame Teilnehmernummer (GRPNR) zugeordnet wird. Ferner wird dem ersten Endgerät (M1) ein erster Kennzeichner (ID1) und dem zumindest einen zweiten Endgerät (M2) ein zweiter Kennzeichner (ID2) zugeordnet. Der erste und der zumindest eine zweite Kennzeichner (ID1, ID2) werden beim Aufbau von Ruf-Verbindungen (C11, C12, C13) über das Telekommunikationsnetz (NET) zwischen dem ersten Endgerät (M1) beziehungsweise dem zumindest einen zweiten Endgerät (M2) und den Kommunikationspartner-Endgeräten (KPM1, KPM2, KPM3) ausgewertet.

## Beschreibung

Die vorliegende Erfindung betrifft ein Verfahren zur Verwaltung eines ersten und zumindest eines zweiten Mobilfunk-Endgerätes, die über ein Mobilfunk-Telekommunikationsnetz jeweils Verbindungen zu Kommunikationspartner-Endgeräten aufbauen können, nach dem Oberbegriff des Anspruches 1 sowie eine Vorrichtung nach dem Oberbegriff des Anspruches 12, ein Programm-Modul nach dem Oberbegriff des Anspruches 13, ein Mobilfunk-Endgerät nach dem Oberbegriff des Anspruches 14, ein Programm-Modul für ein Mobilfunk-Endgerät nach dem Oberbegriff des Anspruches 15 und ein Identifizierungsmodul für ein Mobilfunk-Endgerät nach dem Oberbegriff des Anspruches 16.

Einem Teilnehmer, der Telekommunikationsdienste eines Mobilfunk-Telekommunikationsnetzes in Anspruch nehmen möchte, wird üblicherweise eine individuelle, teilnehmerspezifische Lizenz sowie eine individuelle Teilnehmernummer zugewiesen. Diese teilnehmerspezifischen Daten sind auf einem sogenannten SIM-Modul (SIM = Subscriber Identity Module) gespeichert, das in ein Mobilfunk-Endgerät des Teilnehmers eingelegt wird. Weitere teilnehmerspezifische Daten sind in einer oder mehreren Datenbanken des Mobilfunk-Telekommunikationsnetzes abgelegt. Wenn der Teilnehmer sich dann bei dem Mobilfunk-Telekommunikationsnetz mit seinem Mobilfunk-Endgerät anmeldet, tauschen das Endgerät und das Telekommunikationsnetz einen Teil ihrer jeweiligen teilnehmerspezifischen Daten aus. Auf diese Weise wird sichergestellt, dass nur jeweils ein Teilnehmer sich unter Nutzung seiner jeweiligen teilnehmerspezifischen Daten auf seine jeweilige Teilnehmer-Lizenz bei dem Telekommunikationsnetz anmelden kann.

Bei dem bekannten Verfahren muss demnach jeder Teilnehmer eine persönliche Lizenz zur Nutzung der Telekommunikationsdienste des Telekommunikationsnetzes erwerben. Bei den üblichen monatlichen Grundgebühren ist eine solche Lizenz jedoch unter Umstanden sehr teuer.

Wenn ein Teilnehmer nicht nur ein Mobilfunk-Endgerät, sondern mehrere Endgeräte besitzt, jedoch nur eine Mobilfunk-Lizenz, so muss der Teilnehmer seine SIM-Karte jeweils in dasjenige Endgerät einlegen, das er benutzen möchte. Dies ist beispielsweise der Fall, wenn der Teilnehmer einerseits ein in seinem Kraftfahrzeug eingebautes Mobilfunk-Endgerät nutzen möchte und andererseits ein Endgerät, das er auch außerhalb des Kraftfahrzeuges mit sich führt. Das jeweilige Auswechseln der SIM-Karte ist für den Teilnehmer unbequem und umständlich.

Es ist daher Aufgabe der Erfindung, eine Mehrzahl von Mobilfunk-Endgeräten die einem Teilnehmer oder einer Gruppe von Teilnehmern gehören, komfortabel und bequem nutzbar zu machen.

Diese Aufgabe wird gelöst durch ein Verfahren gemäß der technischen Lehre des Anspruchs 1 sowie eine Vorrichtung gemäß der technischen Lehre des Anspruchs 12, ein Programm-Modul gemäß der technischen Lehre des Anspruchs 13, ein Mobilfunk-Endgerät gemäß der technischen Lehre des Anspruchs 14, ein Programm-Modul für ein Mobilfunk-Endgerät gemäß der technischen Lehre des Anspruchs 16 und ein Identifizierungsmodul für ein Mobilfunk im Endgerät gemäß der technischen Lehre des Anspruchs 16.

Der Erfindung liegt dabei der Gedanke zu Grunde, mehrere Mobilfunk-Endgeräte zu einer gemeinsamen Mobilfunk-Endgerätegruppe zusammenzufassen. Dieser Endgerätegruppe wird eine gemeinsame Teilnehmernummer zugeordnet, unter der die jeweiligen Endgeräte der Endgerätegruppe für Kommunikationspartner erreichbar sind. Die Endgeräte der Endgerätegruppe erhalten ferner jeweils einen individuellen Kennzeichner, mit dem die Endgeräte unterscheidbar sind. Mit Hilfe dieses Kennzeichners kann das Telekommunikationsnetz für die Endgerätegruppe ankommende Ruf-Verbindungen jeweils individuell einem Endgerät der Endgerätegruppe zuordnen. Somit ist es beispielsweise bei dem eingangs genannten Beispiel möglich, sowohl das in dem Kraftfahrzeug eingebaute Endgerät als auch das außerhalb des Kraftfahrzeug nutzbare Endgerät einer gemeinsamen Mobilfunk-Endgerätegruppe zuzuordnen, bei der dann lediglich eine Mobilfunk-Lizenz erforderlich ist. Auch für Mitglieder einer Personengruppe, beispielsweise für Mitglieder einer Familie oder einer Arbeitsgruppe, ist es vorteilhaft, wenn sie derart zu einer Endgerätegruppe zusammengefasste Endgeräte nutzen. Die Mitglieder der Gruppe können nämlich über eine gemeinsame Teilnehmernummer erreicht werden, so dass sich ein externer Kommunikationspartner nicht jeweils individuelle Teilnehmernummern, sondern nur die gemeinsame Teilnehmernummer merken muss.

Weitere vorteilhafte Ausgestaltungen der Erfindung ergeben sich aus den abhängigen Ansprüchen.

Für die Endgerätegruppe kann eine maximale Anzahl gleichzeitiger Ruf-Verbindungen, z.B. eine oder zwei Ruf-Verbindungen, zu Kommunikationspartner-Endgeräten außerhalb der Endgerätegruppe oder zwischen den Endgeräten der Endgerätegruppe zugelassen werden. Auf diese Weise kann beispielsweise durch eine einer Familie zugeordnete Gruppen-Lizenz einerseits das jeweilige Telekommunikationsnetz optimal ausgelastet werden und andererseits eine übermäßige und daher kostenintensive Nutzung der Gruppenlizenz vermieden werden.

Der jeweilige endgerätespezifische Kennzeichner, der einem Endgerät einer Endgerätegruppe zugeordnet ist, wird in einer vorteilhaften Variante jeweils von dem Endgerät an das Telekommunikationsnetz übertragen. Dieses kann somit erkennen, wenn das Endgerät zur Kommunikation bereit ist. Ferner ist es möglich, dass der Kennzeichner als eine Endziffer ausgestaltet ist, die zusätzlich zu der der Endgerätegruppe zugeordneten Teilnehmernummer von einem Kommunikationspartner wählbar ist. Die Endgeräte werden dann von dem Telekommunikationsnetz wie eine Telekommunikationsanlage mit Teilnehmerspezifischer Direktdurchwahl behandelt, bei der jedes der Endgeräte der Endgerätegruppe individuell über das Telekommunikationsnetz adressierbar ist. Weiter ist es möglich, dass das Telekommunikationsnetz den jeweiligen Endgeräten einer Endgerätegruppe individuell einen solchen Kennzeichner zuweist, wenn sich die Endgeräte bei dem Telekommunikationsnetz anmelden.

Innerhalb der Endgerätegruppe kann eines der Endgeräte als ein bevorzugtes Ziel für aus den Telekommunikationsnetz ankommende, an die Teilnehmernummer der Endgerätegruppe gerichtete Ruf-Verbindungen bestimmt werden. So kann beispielsweise der eingangs erwähnte Teilnehmer, der sowohl ein in seinem Kraftfahrzeug installiertes Endgerät als auch ein außerhalb des Kraftfahrzeuges nutzbares Endgerät betreibt, das in dem Kraftfahrzeug installierte Endgerät als temporäres bevorzugtes Ziel für ankommende Ruf-Verbindungen festlegen, solange sich der Teilnehmer im Kraftfahrzeug befindet.

In einer weiteren Variante der Erfindung erhält eines der Endgeräte aus einer Endgerätegruppe eine sogenannte Master-Berechtigung. Nur mit dieser Master-Berechtigung ist es dann möglich, Parameter der Endgerätegruppe insgesamt oder einzelner Endgerät der Endgerätegruppe zu modifizieren. Ein solcher Parameter ist zum Beispiel, ob ein Endgerät als bevorzugtes Ziel für ankommende Rufe zu behandeln ist. Mit Hilfe der Master-Berechtigung können auch einzelne Endgeräte der Gruppe für Ruf-Verbindungen gesperrt oder freigegeben werden. Vorzugsweise sind die der Master-Berechtigung zugeordneten Funktionen durch eines oder mehrere Passwörter geschützt.

Ist die maximale Anzahl gleichzeitig für eine Endgerätegruppe erlaubter Ruf-Verbindungen geringer als die Anzahl von Endgeräten, kann möglicherweise ein von einem Endgerät der Endgerätegruppe an das Telekommunikationsnetz gesendeter Verbindungswunsch von diesem nicht erfüllt werden. Das Telekommunikationsnetz trägt dann den Verbindungswunsch in eine Warteschlange ein und stellt die gewünschte Verbindung her, sobald die oben genannte maximale Anzahl von Ruf-Verbindungen wieder unterschritten ist. Die Reihenfolge der Abarbeitung von in eine solche Warteschlange eingetragenen Verbindungswünschen kann dabei von in den jeweiligen Verbindungswünschen angegebenen Ziel-Rufnummern und/oder von der Reihenfolge ihres Eintragens in die Warteschlange abhängig sein.

In einer weiteren Variante der Erfindung kann eine Ruf-Verbindung, die zu einem Endgerät einer Endgerätegruppe führt, von diesem über das Telekommunikationsnetz an ein anderes Endgerät der Endgerätegruppe weitervermittelt werden. Dazu schickt das erstere Endgerät eine Anweisung an das Telekommunikationsnetz, die jeweilige Ruf-Verbindung an das letztere Endgerät umzuschalten.

Kombinationen der oben beschriebenen Varianten sowie der in den abhängigen Ansprüchen genannten Lösungen sind ohne Weiteres möglich.

Im Folgenden werden die Erfindung sowie weitere vorteilhafte Ausgestaltungen anhand eines Ausführungsbeispiels unter zur Hilfenahme der Figuren dargestellt.
Es zeigen:
- Figur 1: eine schematisch dargestellte Anordnung zur Ausführung der Erfindung mit erfindungsgemäßen Endgeräten M1 bis M3 einer Endgerätegruppe GRP, die von einem Mobilfunk-Telekommunikationsnetz NET bedient werden,
- Figur 2: eine erfindungsgemäße Behandlung von Verbindungswünschen, die von den Endgeräten M1 bis M3 an das Telekommunikationsnetz NET gesandt werden und
- Figur 3: eine Behandlung von für die Endgerätegruppe GRP ankommenden Anrufen.

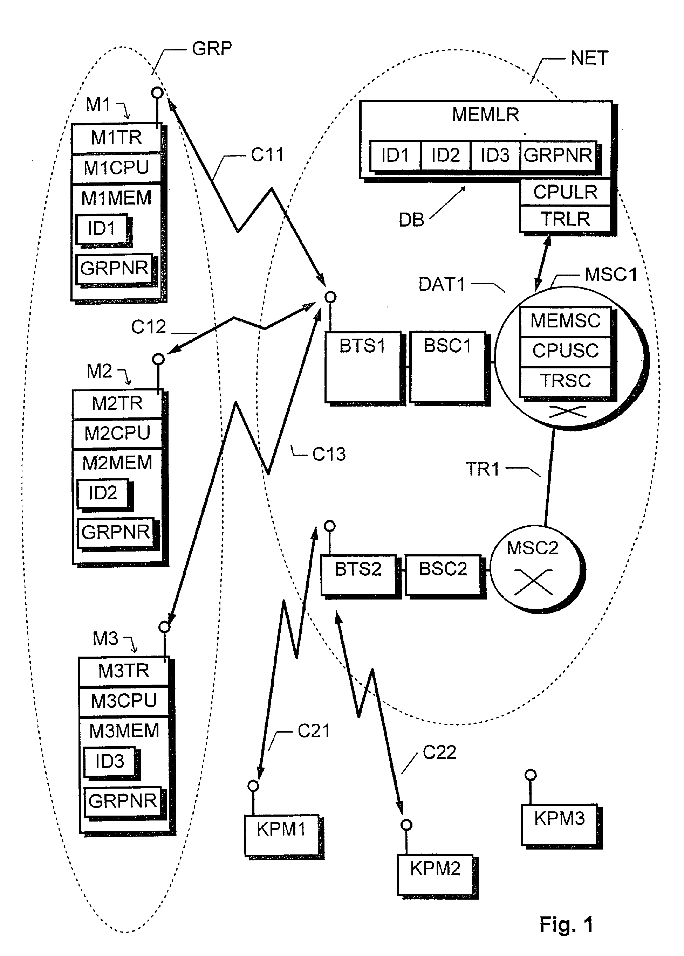

Figur 1 zeigt eine sehr schematische Anordnung, in der eine Gruppe von Mobilfunk-Endgeräten M1, M2 und M3 als Endgerätegruppe durch ein Telekommunikationsnetz NET bedient werden. Bei dem Telekommunikationsnetz NET handelt es sich um ein Mobilfunk-Telekommunikationsnetzwerk oder um ein Netzwerk, das sowohl Mobilfunk-Kommunikation als auch leitungsgebundene Kommunikation erlaubt. Von dem Telekommunikationsnetz NET sind beispielhaft für andere, in Figur 1 nicht dargestellte Einrichtungen, Mobilfunk-Vermittlungsstellen MSC1 und MSC2 gezeigt, die über ein Leitungsbündel TR1 miteinander verbunden sind.

Die Vermittlungsstellen MSC1 und MSC2 leistet neben erfindungsgemäßen Funktionen auch von sogenannten Mobile Switching Centern bekannte Grundfunktionen. Der Vermittlungsstelle MSC1 sind eine Zugangseinrichtung BTS1 sowie eine Steuerungseinrichtung BSC1 zur Steuerung der Zugangseinrichtung BTS1 zugeordnet. Weitere der Vermittlungsstelle MSC1 zugeordnete Zugangseinrichtungen sind aus Gründen der Übersichtlichkeit nicht dargestellt. Die Zugangseinrichtung BTS1 kann beispielsweise Funktionen einer sogenannten Base Transceiver Station eines Mobilfunknetzes erfüllen. Die Zugangseinrichtung BTS 1 stellt eine Funk-Schnittstelle für die Endgeräte M1 bis M3 zur Verfügung, was in Figur 1 durch eine angedeutete Antenne zum Ausdruck kommt. Die Zugangseinrichtung BTS1 und die Steuerungseinrichtung BSC1 können auch in die Vermittlungsstelle MSC1 integriert sein.

Von der Vermittlungsstelle MSC1 sind beispielhaft einige wichtige Komponenten gezeigt, nämlich ein Verbindungsmittel TRSC sowie ein Steuermittel CPUSC und ein Speichermittel MEMSC. Mit dem Verbindungsmittel TRSC kann die Vermittlungsstelle MSC1 Daten- und Sprachverbindungen sowie Signalisierungsverbindungen zu Teilnehmern oder anderen Vermittlungsstellen aufbauen. Bei dem Steuermittel CPUSC handelt es sich um einen Prozessor oder um eine Gruppe von Prozessoren, die Programmcode von Programm-Modulen ausführen können, die in dem Speichermittel MEMSC gespeichert sind. Das Steuermittel CPUSC steuert die Funktionen der Vermittlungsstelle MSC1 und nimmt dabei beispielsweise auf die Funktionen des Verbindungsmittels TRSC Einfluss. Das Verbindungsmittel TRSC, das Steuermittel CPUSC und das Speichermittel MEMSC sind durch in Figur 1 nicht dargestellte Verbindungen untereinander verbunden. Weiterhin kann die Vermittlungsstelle MSC1 weitere Baugruppen aufweisen, z.B. ein Koppelnetzwerk oder eine Schnittstelle zu einem Network Management System. Die Vermittlungsstelle MSC2 kann intern ebenfalls so ausgestattet sein wie die Vermittlungsstelle MSC1. Die Vermittlungsstelle MSC2 kann jedoch auch eine konventionelle, bekannte Vermittlungsstelle sein.

Auch die Zugangseinrichtung BTS1 und die Steuerungseinrichtung BSC1 weisen jeweils nicht dargestellte Speichermittel und Steuermittel, mit denen Programmcode von Programm-Module gespeichert beziehungsweise ausgeführt werden kann. Die Zugangseinrichtung BTS1 kann auch in die Steuerungseinrichtung BSC1 integriert sein.

Der Vermittlungsstelle MSC2 sind eine Zugangseinrichtung BTS2 sowie eine Steuerungseinrichtung BSC2 zugeordnet. Die Zugangseinrichtung BTS2 erfüllt dabei ähnliche Funktionen wie die Zugangseinrichtung BTS1, die Steuerungseinrichtung BSC2 ähnliche Funktionen wie die Steuerungseinrichtung BSC1. Die Zugangseinrichtung BTS1, die Steuerungseinrichtung BSC1 und die Vermittlungsstelle MSC1 sowie die Zugangseinrichtung BTS2, die Steuerungseinrichtung BSC2 und die Vermittlungsstelle MSC2 sind untereinander jeweils verbunden.

Die Mobilfunk-Endgeräte M1, M2 und M3 sind grundsätzlich gleich aufgebaut. Daher wird im Folgenden nur das Endgerät M1 näher erläutert. Von dem Endgerät M1 sind ein Schnittstellenmodul M1TR, ein Steuermittel M1CPU sowie Speichermittel M1MEM schematisch gezeigt. Weitere Komponenten, wie zum Beispiel eine Tastatur zur Eingabe von Befehlen, ein Mikrofon zur Spracheingabe, ein Lautsprecher zur Sprachausgabe sowie ein Display zur Anzeige von Informationen, sind aus Gründen der Vereinfachung in Figur 1 nicht dargestellt. Über das Schnittstellenmodul M1TR kann das Endgerät M1 über Funk Daten mit dem Telekommunikationsnetz NET austauschen. Eine Funk-Verbindung C11 zwischen dem Endgerät M1 und der Zugangseinrichtung BTS1 ist dafür beispielhaft eingezeichnet. Das Steuermittel M1CPU ist ein Prozessor oder eine Anordnung von Prozessoren und steuert die Funktionen des Endgerätes M1. Dabei führt das Steuermittel M1CPU Programmcode von Programm-Modulen aus, die in den Speichermitteln M1MEM abgelegt sind. Die Speichermittel M1MEM enthalten beispielsweise sogenannte RAM-Baugruppen oder Flash-ROM-Bausteine (RAM = Random Access Memory, ROM = Read Only Memory).

Das Endgerät M2 weist ein Schnittstellenmodul M2TR, das Endgeräte M3 ein Schnittstellenmodul M3TR auf, die jeweils in ihrer Funktion dem Schnittstellenmodul M1TR entsprechen. Ferner weisen die Endgeräte M2 und M3 Steuermittel M2CPU bzw. M3CPU auf, die grundsätzlich gleiche Funktionen wie das Steuermittel M1CPU erfüllen. Ferner sind in den Endgeräten M2 und M3 Speichermittel M2MEM bzw. M3MEM enthalten, deren Funktionen denen der Speichermittel M1MEM entsprechen.

Die Endgeräte M1 bis M3 bilden eine Endgerätegruppe GRP, der eine gemeinsame Teilnehmernummer GRPNR zugeordnet ist. Ferner sind dem Endgerät M1 ein Kennzeichner ID1, dem Endgerät M2 ein Kennzeichner ID2 und dem Endgerät M3 ein Kennzeichner ID3 zugeordnet. Die Teilnehmernummer GRPNR ist in den jeweiligen Speichermitteln der Endgeräte M1 bis M3 sowie in einer Datenbankvorrichtung DB des Mobilfunk-Telekommunikationsnetzes NET abgelegt. Die Kennzeichner ID1 bis ID3 sind in den jeweils zugeordneten Endgeräten M1 bis M3 sowie in der Datenbankvorrichtung DB gespeichert. Mit Hilfe der Kennzeichner ID1 bis ID3 können die Endgeräte M1 bis M3 individuell durch das Telekommunikationsnetz NET adressiert werden.

Die Datenbankvorrichtung DB ist in Figur 1 als eine separate Vorrichtung ausgestaltet, von der beispielhaft einige wesentliche Komponenten gezeigt sind, nämlich ein Verbindungsmittel TRLR sowie ein Steuermittel CPULR und ein Speichermittel MEMLR. Mit dem Verbindungsmittel TRLR kann die Datenbankvorrichtung DB eine Datenverbindung DAT1 zu der Vermittlungsstelle MSC1 sowie auch zu anderen, nicht dargestellten Vermittlungsstellen aufbauen. Über die Datenverbindung DAT1 hat die Vermittlungsstelle MSC1 Zugang zu den in der Datenbankvorrichtung DB abgelegten Daten. Bei dem Steuermittel CPULR handelt es sich um einen Prozessor oder um eine Gruppe von Prozessoren, die Programmcode von Programm-Modulen ausführen können, die in dem Speichermittel MEMLR gespeichert sind. Dort sind auch die Kennzeichner ID1 bis ID3 sowie die Teilnehmernummer GRPNR gespeichert. Das Steuermittel CPULR steuert die Funktionen der Datenbankvorrichtung DB und nimmt dabei beispielsweise auf die Funktionen des Verbindungsmittels TRLR Einfluss. Ferner verwaltet das Steuermittel CPULR die in dem Speichermittel MEMLR abgelegten Daten. Das Verbindungsmittel TRLR, das Steuermittel CPULR und das Speichermittel MEMLR sind durch in Figur 1 nicht dargestellte Verbindungen untereinander verbunden.

Die Datenbankvorrichtung DB kann auch in die Vermittlungsstelle MSC1 oder in die Zugangseinrichtung BTS oder in die Steuerungseinrichtung BSC1 integriert sein. Das Steuermittel CPUSC erfüllt dann die Funktionen des Steuermittels CPULR und das Speichermittel MEMSC die Funktionen des Speichermittels MEMLR. In einem solchen Szenario kann beispielsweise ein von der Vermittlungsstelle MSC1 verwaltetes, entsprechend modifiziertes sogenanntes Home Location Register Daten der Endgerätegruppe GRP enthalten. In der Datenbankvorrichtung DB können auch weitere, in Figur 1 aus Gründen der Vereinfachung nicht dargestellte Daten abgelegt sein.

Ferner kann auch die Vermittlungsstelle MSC2 auf die Datenbankvorrichtung DB zugreifen und beispielsweise eine Spiegeldatenbank erstellen, wenn sich ein Endgerät der Endgerätegruppe GRP, beispielsweise das Endgerät M3, im Rahmen eines sogenannten "Roamings" im Funkbereich der Zugangseinrichtung BTS2 aufhält.

Wenn sich das Endgerät M1 bei dem Telekommunikationsnetz NET anmeldet, also erstmalig Kontakt aufnimmt, sendet das Endgerät M1 seinen Kennzeichner ID1 sowie weitere Identifizierungskennungen an die Zugangseinrichtung BTS1. Weitere Prozeduren im Rahmen des Anmeldens eines Endgerätes bei einem Mobilfunk-Telekommunikationsnetz, beispielsweise das Austauschen von Passwörtern und das Verschlüsseln von Informationen, sind an sich bekannt und sollen daher an dieser Stelle nicht weiter erläutert werden. Die Zugangseinrichtung BTS1 gibt den Kennzeichner ID1 an die Steuerungseinrichtung BSC1 weiter, von wo der Kennzeichner ID1 über die Vermittlungsstelle MSC1 zu der Datenbankvorrichtung DB gelangt und von dieser mit dem bereits abgelegten Kennzeichner ID1 verglichen wird. Es ist jedoch auch möglich, dass für den Kennzeichner ID1 nur ein Speicherplatz reserviert wird, der beim erstmaligen Anmelden des Endgerätes M1 bei dem Telekommunikationsnetz NET von der Datenbankvorrichtung DB mit dem Kennzeichner ID1 belegt wird. Im Zusammenhang mit dem Eintragen des Kennzeichners ID1 wird zugleich ein Merker gesetzt, dass das Endgerät M1 nunmehr empfangsbereit ist. Anhand des Kennzeichners ID1 kann die Vermittlungsstelle MSC1 erkennen, dass das Endgerät M1 der Endgerätegruppe GRP zugeordnet ist.

Es ist jedoch auch möglich, dass das Endgerät M1 einen der Endgerätegruppe GRP insgesamt zugeordneten Endgerätegruppen-Kennzeichner an die Zugangseinrichtung BTS1 und damit an die Vermittlungsstelle MSC1 sendet, an dem die Vermittlungsstelle MSC1 erkennen kann, dass das Endgerät M1 zu der Endgerätegruppe GRP gehört. In einem solchen Szenario kann das Telekommunikationsnetz NET den Kennzeichner ID1 jeweils neu dem Endgerät M1 bei dessen Anmelden zuordnen. Der Kennzeichner ID1 kann dann beispielsweise per Zufallsgenerator erzeugt werden oder als eine fortlaufende Nummer dem jeweiligen Endgerät in Abhängigkeit von der Reihenfolge seines Anmeldens zugewiesen werden. Ferner kann der Kennzeichner ID1 auch eine Endziffer zu der Teilnehmernummer GRPNR sein.

Vorteilhafterweise sind der Kennzeichner ID1 und die Teilnehmernummer GRPNR nicht unmittelbar in dem Endgerät M1 fest montierten Speichermitteln enthalten, sondern auf einem sogenannten SIM-Modul (SIM = Subscriber Identity Module). Ein solches SIM-Modul ist ein Identifizierungsmodul, das üblicherweise auf einer Karte angeordnet ist. Das SIM-Modul kann wahlweise in das Endgerät M1 oder auch in ein anderes Endgerät eingelegt werden. Das jeweilige Endgerät liest dann die auf dem Identifizierungsmodul abgelegten teilnehmerspezifischen Daten aus und arbeitet mit den ausgelesenen Daten.

Mit Hilfe eines in den Speichermittel M1MEM abgelegten und von dem Steuermittel M1CPU ausgeführten Programm-Moduls kann das Endgerät M1 sowohl den Kennzeichner ID1 als auch die Teilnehmernummer GRPNR auswerten. Ferner ist auch das Schnittstellenmodul M1TR dazu ausgestaltet, Signalisierungstelegramme zu senden und zu empfangen, in denen der Kennzeichner ID1 enthalten ist. Anhand des Kennzeichners ID1 oder auch anhand eines weiteren, nicht dargestellten, der Endgerätegruppe GRP zugeordneten Endgerätegruppen-Kennzeichners kann das Endgerät M1 erkennen, dass es der Endgerätegruppe GRP zugeordnet ist.

Zum Aufbau einer Ruf-Verbindung sendet das Endgerät M1 einen Verbindungswunsch auf der Verbindung C11 an die Zugangseinrichtung BTS1. In dem Verbindungswunsch gibt das Endgerät M1 eine einem Kommunikationspartner-Endgerät KPM1 zugeordnete Teilnehmernummer an. Das Endgerät KPM1 ist ebenfalls ein Mobilfunk-Endgerät, könnte jedoch auch ein Festnetz-Telefon sein. Das Endgerät KPM1 wird ebenso wie weitere Endgeräte KPM2 und KPM3 durch die Vermittlungsstelle MSC2 bedient. Gemäß dem Verbindungswunsch baut die Vermittlungsstelle MSC1 eine Verbindung auf dem Leitungsbündel TR1 zu der Vermittlungsstelle MSC2 auf, von wo aus die Verbindung dann über eine Funkverbindung C21 zu dem Endgerät KPM1 vervollständigt wird.

Anschließend sendet das Mobilfunk-Endgerät KPM2 auf einer Verbindung C22 einen Verbindungswunsch zu der Endgerätegruppe GRP an die Zugangseinrichtung BTS2. In diesem Verbindungswunsch ist die Teilnehmernummer GRPNR der Endgerätegruppe GRP enthalten. Die Vermittlungsstelle MSC2 baut daher auf dem Leitungsbündel TR1 eine Verbindung zu der Vermittlungsstelle MSC1 auf. Diese ermittelt anhand einer in der Datenbankvorrichtung DB abgelegten Tabelle, dass das Endgerät M1 zwar das bevorzugte Rufziel innerhalb der Endgerätegruppe GRP ist, dass zu dem Endgerät M1 jedoch bereits eine Verbindung führt. Daher baut die Vermittlungsstelle MSC1 über die Zugangseinrichtung BTS1 eine Verbindung C12 zu dem Endgerät M2 als alternativen Rufziel auf. Es ist jedoch auch möglich, dass für die Endgerätegruppe GRP nur jeweils eine Ruf-Verbindung zulässig ist. In diesem Fall signalisiert die Vermittlungsstelle MSC1 der Vermittlungsstelle MSC2, dass momentan keine Verbindung zu der Endgerätegruppe GRP möglich ist und das Endgerät KPM2 erhält ein "Belegt"-Zeichen. Ferner ist es möglich, dass in dem von dem Endgerät KPM2 gesendeten Verbindungswunsch der Kennzeichner ID3 enthalten ist, beispielsweise in Form einer zusätzlich zu der Teilnehmernummer GRPNR gewählten Endziffer, so dass die Vermittlungsstelle MSC1 unmittelbar und ohne Berücksichtigung bevorzugter eine Verbindung C13 zu dem Endgerät M3 aufbaut. Ferner kann auch festgelegt sein, dass an die Endgerätegruppe GRP gerichtete Verbindungswünsche stets zunächst an das Endgerät M3 durchgestellt werden sollen und nur dann, wenn dieses nicht erreichbar ist, zu dem Endgerät M1 oder M2 weitergeleitet werden. Die Daten in Bezug auf die bevorzugten Ziele in der Endgerätegruppe GRP sind in der Datenbankvorrichtung DB eingetragen.

Im Folgenden wird davon ausgegangen, dass das Endgerät M1 die Verbindung C11 und das Endgerät M2 die Verbindung C12 zu der Zugangseinrichtung BTS1 unterhalten. Ferner sei festgelegt, dass nur zwei gleichzeitige Verbindungen für die Endgerätegruppe GRP erlaubt sind. Wenn nun das Endgerät M3 auf einer Verbindung C13 einen Verbindungswunsch für eine Verbindung zu dem Endgerät KPM3 sendet, so stellt die Vermittlungsstelle MSC1 fest, dass bereits die zulässige Anzahl von Verbindungen für die Endgerätegruppe GRP erreicht ist. Die Vermittlungsstelle MSC1 sendet daher dem Endgerät M3 beispielsweise ein "Belegt"-Zeichen oder eine Nachricht mit einer Information, dass der Verbindungswunsch momentan nicht erfüllt werden kann.

Ferner trägt die Vermittlungsstelle MSC1 den Verbindungswunsch des Endgerätes MR3 in eine Warteschlange ein. Wenn nun beispielsweise das Endgerät M2 seine Verbindung C12 beendet, liest die Vermittlungsstelle MSC1 den in der Warteschlange eingetragenen Verbindungswunsch des Endgerätes M3 aus und stellt die gewünschte Ruf-Verbindung her. Sind in der Warteschlange mehrere Ruf-Verbindungswünsche eingetragen, kann die Vermittlungsstelle MSC1 ermitteln, welcher dieser Verbindungswünsche bevorzugt zu bearbeiten ist. Dabei ist es beispielsweise möglich, dass die Verbindungswünsche in der Reihenfolge ihres Eintragens wieder abgearbeitet werden oder dass beispielsweise der zuletzt eingetragene Verbindungswunsch zuerst bearbeitet wird. Ferner kann die Vermittlungsstelle MSC1 auch die in den jeweiligen in der Warteschlange eingetragenen Verbindungswünschen eingetragenen Ziel-Rufnummern auswerten, und Verbindungswünsche zu bevorzugten Zielen bevorzugt behandeln.

Wenn der von dem Endgerät M3 gesendete Verbindungswunsch sich an ein bevorzugtes Ziel richtet, beispielsweise an eine Notrufeinrichtung, so ist es auch möglich, dass die Vermittlungsstelle MSC1 die Verbindung C12 oder die Verbindung C11 beendet oder unterbricht, um die von dem Endgerät M3 gewünschte Verbindung unmittelbar herzustellen. Dem jeweiligen Endgerät M1 bzw. M2 kann die Vermittlungsstelle MSC1 dabei beispielsweise eine Ansage-Nachricht senden, dass die jeweilige Verbindung C11 bzw. C12 unterbrochen wird. Nachdem das Endgerät M3 die somit hergestellte Ruf-Verbindung wieder beendet hat, kann die Vermittlungsstelle MSC1 auch die ursprünglichen Verbindungen C12 bzw. C11 wieder herstellen.

In einer weiteren Variante sendet beispielsweise das Endgerät M2 der Vermittlungsstelle MSC1 eine Anweisung, dass das Endgerät M3 an Stelle des Endgerätes M2 eine zwischen dem Endgerät M2 und dem Endgerät KPM2 bestehende Verbindung C12-TR1-C22 übernehmen soll. Daraufhin stellt die Vermittlungsstelle MSC1 die Verbindung C13 her und schaltet die Verbindung C12-TR1-C22 auf die gewünschte Verbindung C13-TR1-C22 um.

Dem Endgerät M1 ist in dem Beispiel aus Figur 1 eine sogenannte MasterFunktion zugeordnet. Das Endgerät M1 ist daher berechtigt, der Endgerätegruppe GRP zugeordnete Parameter sowie den jeweiligen Endgeräten M2 und M3 individuell zugeordnete Parameter zu modifizieren. Solche Parameter sind beispielsweise, in welcher Reihenfolge für die Endgerätegruppe GRP ankommende Verbindungswünsche durch die Vermittlungsstelle MSC1 zu bearbeiten sind. Zur Modifizierung solcher Daten wird zunächst eine Verbindung zwischen dem Endgerät M1 und der Verbindungsstelle MSC1 aufgebaut. Dann wird ein Identifizierungscode sowie ein Passwort an dem Endgerät M1 angegeben, anhand derer die Vermittlungsstelle MSC1 erkennen kann, dass das Endgerät M1 zur Modifikation der Daten berechtigt ist. Dabei kann das Endgerät M1 z.B. einen sogenannten WAP-Browser (WAP = Wireless Application Protocol) ausführen, über den das Endgerät M1 seinem jeweiligen Bediener von der Vermittlungsstelle MSC1 gesendete Konfigurationsdaten anzeigen kann. Über den WAP-Browser kann an dem Endgerät M1 beispielsweise angegeben werden, dass die maximale Anzahl gleichzeitiger Ruf-Verbindungen für die Endgerätegruppe GRP auf zwei Ruf-Verbindungen limitiert ist oder dass ankommende Verbindungswünsche zunächst zu dem Endgerät M1 durchzustellen sind und dann, wenn dieses nicht empfangsbereit ist, an das Endgerät M2 und gegebenenfalls an das Endgerät M3 signalisiert werden sollen. Ferner kann über das Endgerät M1 z.B. auch das Endgerät M2 für Ruf-Verbindungen über das Telekommunikationsnetz NET gesperrt oder freigegeben werden. Im Rahmen der Masterfunktion können auch bestimmte Rufziele, beispielsweise besonders gebührenintensive Service-Rufnummern, für alle Endgeräte M1 bis M3 der Endgerätegruppe GRP gesperrt werden. Weiter kann das Endgerät M1 die Masterfunktion dauerhaft oder temporär an das Endgerät M2 oder das Endgerät M3 deligieren. Die jeweiligen von dem Endgerät M1 im Rahmen der Masterfunktion gesendeten Daten trägt die Vermittlungsstelle MSC1 in die Datenbankvorrichtung DB ein.

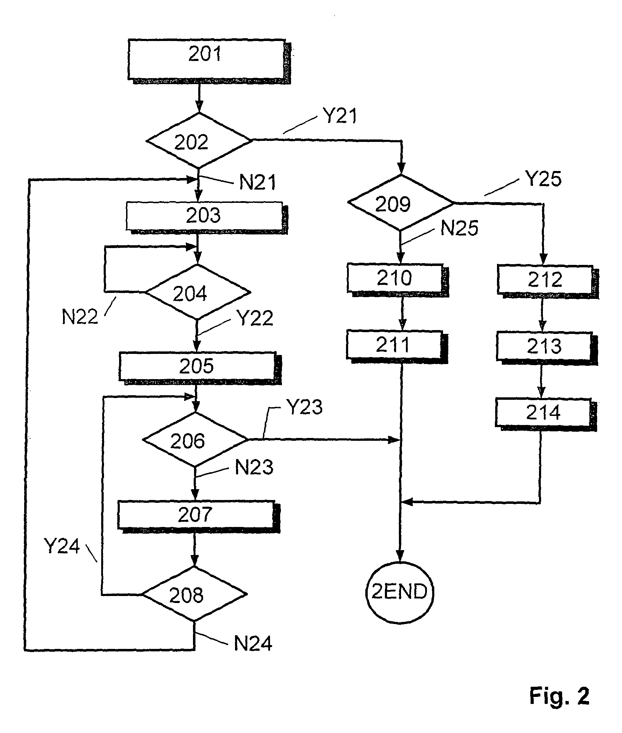

Figur 2 zeigt ein Ablaufdiagramm für einen Verbindungswunsch, der von dem Endgerät M1 an die Vermittlungsstelle MSC1 in einem Schritt 201 gesendet wird. In einem Überprüfungsschritt 202 überprüft die Vermittlungsstelle MSC1, ob bereits die maximale Anzahl von Ruf-Verbindungen der Endgerätegruppe GRP über Telekommunikationsnetz NET unterhalten wird. Ist dies nicht der Fall, kommt die Vermittlungsstelle MSC1 zu einem negativen Ergebnis N21 und geht daher zu einem Schritt 203 über, in dem die Vermittlungsstelle MSC1 die gewünschte Ruf-Verbindung aufbaut sowie das Bestehen der Ruf-Verbindung in die Datenbankvorrichtung DB einträgt. In einem Überprüfungsschritt 204 überprüft die Vermittlungsstelle MSC1, ob die Ruf-Verbindung von dem Endgerät M1 oder dessen Kommunikationspartner beendet worden ist. Der Schritt 204 ist in dem Diagramm in Figur 2 als Endlosschleife dargestellt, bei der der Schritt 204 jeweils bei negativem Ergebnis N22, also bei noch von dem Endgerät M1 gehaltener Verbindung, wiederholt wird. Tatsächlich jedoch ist die Vermittlungsstelle MSC1 ereignisgetrieben, so dass der in Figur 2 dargestellte Prozess "schläft", bis ein weiterer, nicht dargestellter Prozess das Beenden der von dem Endgerät M1 gehaltenen Ruf-Verbindung an den in Figur 2 dargestellten Prozess als Ereignis Y22 meldet, so dass dieser "aufgeweckt", also fortgesetzt wird.

Wenn die Ruf-Verbindung des Endgeräts M1 beendet ist, trägt die Vermittlungsstelle MSC1 die damit verbundene Zustandsinformationen bezüglich des Endgerätes M1 in die Datenbankvorrichtung DB ein und überprüft in einem anschließenden Schritt 206, ob sich eventuell Verbindungswünsche in der bereits im Zusammenhang mit Figur 1 erwähnten Warteschlange für Verbindungswünsche befinden.

Ist die Warteschlange leer, so wird in einem Übergang Y23 zu einem Ende-Schritt 2END weitergegangen. Kommt die Vermittlungsstelle MSC1 jedoch in dem Schritt 206 zu dem Ergebnis N23, dass noch ein Verbindungswunsch in der Warteschlange gespeichert ist, so signalisiert die Vermittlungsstelle MSC1 dem betreffenden Endgerät in einem Schritt 207, dass das jeweilige Endgerät nunmehr eine Verbindung aufbauen kann. Die genannte Signalisierung kann beispielsweise als eine sogenannte SMS-Nachricht (SMS = Short Message Service) oder als eine sonstige Signalisierungsnachricht auf einem Signalisierungskanal an das jeweilige Endgerät erfolgen. Ferner ist es möglich, dass die Vermittlungsstelle MSC1 in dem Schritt 207 unmittelbar die angemeldete, in der Warteschlange gespeicherte Verbindung aufbaut. Gleichzeitig mit der genannten Signalisierung startet die Vermittlungsstelle MSC1 einen Timer mit einer vorbestimmten Laufzeit, in der das jeweilige Endgerät die nunmehr mögliche Verbindung aufbauen muss.

In einem Schritt 208 überprüft die Vermittlungsstelle MSC1, ob der Timer abgelaufen ist. Wenn dies der Fall ist, geht die Vermittlungsstelle MSC1 in einem Übergang Y24 wieder zu dem Schritt 206 zurück und überprüft ob weitere Verbindungswünsche in der Warteschlange sind.

Erhält die Vermittlungsstelle MSC jedoch noch während der Laufzeit des Timers in dem Schritt 208 einen Verbindungswunsch von dem Endgerät, dem die Möglichkeit einer Verbindung signalisiert worden ist, so geht die Vermittlungsstelle in einem Übergang N24 wieder zu dem Schritt 203 zurück und baut die gewünschte Ruf-Verbindung auf und entfernt den Verbindungswunsch von der Warteschlange.

Wenn die Vermittlungsstelle MSC1 in dem Schritt 202 zu dem Ergebnis gekommen ist, dass bereits alle der Endgerätegruppe GRP zur Verfügung stehenden Verbindungen belegt sind, geht die Vermittlungsstelle MSC1 in einem mit Y21 bezeichneten Übergang zu einem Schritt 209 weiter, in dem überprüft wird, ob der Verbindungswunsch einen Notruf oder einen Ruf zu einem bevorzugten Ziel betrifft. Ist dies nicht der Fall, so wird in einem Übergang N24 zu einem Schritt 210 übergegangen, in dem dem Endgerät M1 signalisiert wird, dass momentan kein Ruf möglich ist. In einem Schritt 211 wird sodann der Verbindungswunsch in die Warteschlange eingetragen und zum Ende-Schritt 2END übergegangen.

Gelangt die Vermittlungsstelle MSC1 in dem Schritt 209 zu dem Ergebnis, dass der in dem Schritt 201 eingegangene Verbindungswunsch einen Notruf oder einen Ruf zu einem bevorzugten Ziel betrifft, so geht sie in einem Übergang Y25 zu einem Schritt 212, in dem ein Endgerät ausgewählt wird, dessen Ruf-Verbindung nunmehr unterbrochen werden soll. In einem Schritt 213 signalisiert die Vermittlungsstelle MSC1 diesem Endgerät, dass dessen Ruf-Verbindung beendet wird und beendet oder unterbricht dessen Ruf-Verbindung. Ferner kann im Schritt 213 auch vermerkt werden, dass die nunmehr beendete Ruf-Verbindung nach Abschluss des Notrufes wieder aufgenommen werden soll. In einem Schritt 214 erfüllt die Vermittlungsstelle MSC1 den in dem Schritt 201 eingegangenen Verbindungswunsch und baut die gewünschte Notruf-Verbindung auf. Dann wird zum Ende-Schritt 2END übergegangen.

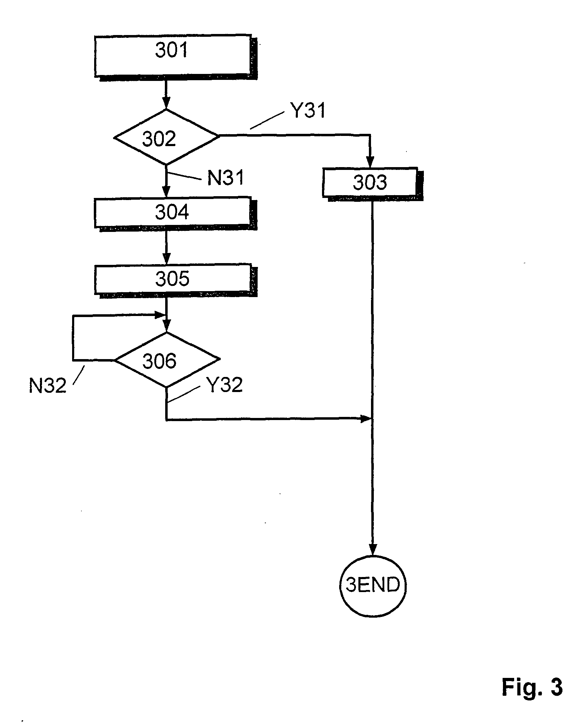

Figur 3 zeigt die Behandlung eines für die Endgerätegruppe GRP in der Vermittlungsstelle MST1 in einem Schritt 301 ankommenden Verbindungswunsches. In einem Schritt 302 überprüft die Vermittlungsstelle MSC1, ob eines oder ob mehrere der Endgeräte M1 bis M3 empfangsbereit sind sowie ob die für die maximale Anzahl der für die Endgerätegruppe GRP erlaubten Ruf-Verbindungen noch nicht erreicht ist. Ist diese maximale Anzahl erreicht, geht die Vermittlungsstelle MSC1 in einem Übergang Y31 zu einem Schritt 303, in dem die Vermittlungsstelle MSC1 dem Anrufenden signalisiert, dass die Endgerätegruppe GRP momentan nicht erreichbar ist. Ferner kann die Vermittlungsstelle MSC1 den nicht befriedigten Verbindungswunsch in eine Warteschlange für nicht erfüllte Verbindungswünsche eintragen, z.B. in eine "Rückruf-bei-Besetzt"-Warteschlange. Der Schritt 303 mündet unmittelbar in einen Ende-Schritt 3END.

Ist jedoch die Endgerätegruppe GRP erreichbar, geht die Vermittlungsstelle MSC1 in einem Übergang N31 zu einem Schritt 304 über, in den die Vermittlungsstelle MSC1 die für die Endgerätegruppe GRP relevanten Daten abfragt. Insbesondere stellt die Vermittlungsstelle MSC1 in dem Schritt 304 fest, an welches der Endgeräte M1 bis M3 der vorliegende Verbindungswunsch durchzustellen ist. Im vorliegenden Fall ist der Verbindungswunsch zu dem Endgerät M2 durchzustellen. Daher stellt die Vermittlungsstelle MSC1 in einem Schritt 305 die gewünschte Ruf-Verbindung zu dem Endgerät M2 her. Wäre das Endgerät M2 momentan nicht erreichbar, beispielsweise weil es abgeschaltet ist, so könnte die Vermittlungsstelle MSC1 in diesem Schritt auch überprüfen, welches der Endgeräte M1 oder M3 als alternatives Rufziel auszuwählen ist.

Der Schritt 306 ist analog zu dem Schritt 204 aus Figur 2 ausgestaltet, d.h. die Vermittlungsstelle MSC1 überprüft in dem Schritt 306, ob das Endgerät M2 oder dessen Kommunikationspartner-Endgerät die nunmehr hergestellte Verbindung beenden. Bei negativem Ergebnis wird der Schritt 306 in einem Pfad N32 wiederholt, bei positivem Ergebnis gelangt die Vermittlungsstelle MSC1 in einem Übergang Y32 zu dem Schritt 3 END.

Die in den Figuren 2 und 3 dargestellten Funktionsabläufe sind als Programm-Module realisiert, die vorzugsweise von dem Steuermittel CPUSC der Vermittlungsstelle MSC1 ausgeführt werden. Derartige Programm-Module können jedoch auch durch Steuermittel der Zugangseinrichtung BTS1 und/oder der Steuerungseinrichtung BSC1 ausgeführt werden.

An den Endgeräten M1 bis M3 können auch besondere Funktionstasten oder auch sogenannte Soft-Keys, also kontextabhängige Funktionstasten, angeordnet sein, mit denen die spezifischen Funktionen im Zusammenhang mit der Endgerätegruppe GRP ausgeführt werden können. Beispielsweise kann die Konfiguration der Master-Funktionen an dem Endgerät M1 über solche Funktionstasten realisiert sein. Ferner ist es auch möglich, dass die Endgeräte M1 bis M3 untereinander kommunizieren. Beispielsweise können die Endgeräte nicht nur für eine Kommunikation mit dem Telekommunikationsnetz NET ausgelegt sein, sondern auch z.B. mit Hilfe sogenannter DECT-Module (DECT = Digital European Cordless Telecommunication) für eine Kommunikation unmittelbare untereinander ausgelegt sein. Ferner kann auch vorbestimmt sein, dass die Endgeräte M1 bis M3 über das Telekommunikationsnetz NET untereinander ("intern") kommunizieren können und zwar insbesondere dann, wenn sich die jeweils intern kommunizierenden Endgeräte in Bereich einer einzigen Zugangseinrichtung, z.B. der Zugangseinrichtung BTS1, oder einer Vermittlungsstelle, z.B. der Vermittlungsstelle MSC1, befinden.

## Patentansprüche

1. Verfahren zur Verwaltung von eines ersten und zumindest eines zweiten Mobilfunk-Endgeräts (M1, M2), die über ein Mobilfunk-Telekommunikationsnetz (NET) jeweils Verbindungen zu Kommunikationspartner-Endgeräten (KPM1, KPM2, KPM3) aufbauen können,
**dadurch gekennzeichnet,**
- dass das erste und das zumindest eine zweite Endgerät (M1, M2) einer gemeinsamen Mobilfunk-Endgerätegruppe (GRP) zugeordnet werden,
- dass der Endgerätegruppe (GRP) eine gemeinsame Teilnehmernummer (GRPNR) zugeordnet wird,
- dass dem ersten Endgerät (M1) ein erster Kennzeichner (ID1) und dem zumindest einen zweiten Endgerät (M2) ein zweiter Kennzeichner (ID2) zugeordnet wird und
- dass der erste und der zumindest eine zweite Kennzeichner (ID1, ID2) beim Aufbau von Ruf-Verbindungen (C11, C12, C13) über das Telekommunikationsnetz (NET) zwischen dem ersten Endgerät (M1) beziehungsweise dem zumindest einen zweiten Endgerät (M2) und den Kommunikationspartner-Endgeräten (KPM1, KPM2, KPM3) ausgewertet werden.

2. Verfahren nach Anspruch 1, **dadurch gekennzeichnet, dass** für die Endgerätegruppe (GRP) eine Anzahl gleichzeitiger Ruf-Verbindungen (C11, C12, C13) zu Kommunikationspartner-Endgeräten (KPM1, KPM2, KPM3) über das Telekommunikationsnetz (NET) vorbestimmt wird.

3. Verfahren nach Anspruch 1, **dadurch gekennzeichnet, dass** das erste und das zumindest eine zweite Endgerät die ihnen jeweils zugeordneten Kennzeichner (ID1, ID2) beim Anmelden an das Telekommunikationsnetz (NET) diesem übertragen.

4. Verfahren nach Anspruch 1, **dadurch gekennzeichnet, dass** der erste und der zumindest eine zweite Kennzeichner (ID1, ID2) jeweils als eine Endziffer der Teilnehmernummer (GRPNR) zugeordnet werden.

5. Verfahren nach Anspruch 1, **dadurch gekennzeichnet, dass** der erste und der zumindest eine zweite Kennzeichner (ID1, ID2) durch das Telekommunikationsnetz (NET) beim Anmelden des ersten und des zumindest einen zweiten Endgerätes (M2) an das Telekommunikationsnetz (NET) dem ersten und dem zumindest einen zweiten Endgerät (M2) in Abhängigkeit von ihrem Anmelden zugewiesen werden.

6. Verfahren nach Anspruch 1, **dadurch gekennzeichnet, dass** das erste oder das zumindest eine zweite Endgerät (M1, M2) als bevorzugtes Ziel für aus dem Telekommunikationsnetz (NET) ankommende, an die Teilnehmernummer (GRPNR) der Endgerätegruppe (GRP) gerichtete Ruf-Verbindungen (C11, C12, C13) vorbestimmt werden.

7. Verfahren nach Anspruch 1, **dadurch gekennzeichnet, dass** dem ersten (M1) oder dem zumindest einen zweiten Endgerät (M2) eine Master-Berechtigung zugeordnet wird, die das jeweilige Endgerät dazu berechtigt, der Endgerätegruppe (GRP) zugeordnete Parameter und/oder den individuellen Endgeräten der Endgerätegruppe (GRP) zugeordnete Parameter zu modifizieren.

8. Verfahren nach Anspruch 1, **dadurch gekennzeichnet, dass** das Telekommunikationsnetz (NET) bei Bestehen einer für die Endgerätegruppe (GRP) vorbestimmten Anzahl gleichzeitiger Ruf-Verbindungen (C11, C12, C13) von dem ersten oder von dem zumindest einen zweiten Endgerät (M2) gesendete Verbindungswünsche zu Kommunikationspartner-Endgeräten (KPM1, KPM2, KPM3) in eine Warteschlange einträgt und dass das Telekommunikationsnetz (NET) die in der Warteschlange eingetragenen Verbindungswünsche jeweils nach Unterschreiten der besagten vorbestimmten Anzahl sequentiell abarbeitet.

9. Verfahren nach Anspruch 8, **dadurch gekennzeichnet, dass** die in die Warteschlange eingetragenen Verbindungswünsche in Abhängigkeit von in den jeweiligen Verbindungswünschen angegebenen Ziel-Rufnummern abgearbeitet wird.

10. Verfahren nach Anspruch 1, **dadurch gekennzeichnet, dass** das Telekommunikationsnetz (NET) einen Verbindungswunsch für eine vorbestimmte, bevorzugte Ruf-Verbindung von oder zu einem Endgerät der Endgerätegruppe (GRP) empfängt und dass das Telekommunikationsnetz (NET) zur Erfüllung des Verbindungswunsches eine mit einem Endgerät der Endgerätegruppe (GRP) bestehende Ruf-Verbindung unterbricht oder beendet.

11. Verfahren nach Anspruch 1, **dadurch gekennzeichnet, dass** das erste Endgerät (M1) eine Anweisung an das Mobilfunk-Telekommunikationsnetz (NET) sendet, eine zwischen dem ersten Endgerät (M1) und einem Kommunikationspartner-Endgerät (KPM1, KPM2, KPM3) bestehende Ruf-Verbindung an das zumindest eine zweite Endgerät umzuschalten, und dass das Mobilfunk-Telekommunikationsnetz (NET) die Ruf-Verbindung an das zumindest eine zweite Endgerät umschaltet.

12. Vorrichtung (DB) für ein Mobilfunk-Telekommunikationsnetz (NET) zur Verwaltung von eines ersten und zumindest eines zweiten Mobilfunk-Endgeräts (M1, M2), die über das Mobilfunk-Telekommunikationsnetz (NET) jeweils Verbindungen zu Kommunikationspartner-Endgeräten (KPM1, KPM2, KPM3) aufbauen können, **dadurch gekennzeichnet,**
- dass die Vorrichtung Zuordnungsmittel (CPUDB, MEMDB) zur Zuordnung des ersten und des zumindest einen zweiten Endgerätes (M2) zu einer gemeinsamen Mobilfunk-Endgerätegruppe (GRP) aufweist,
- dass die Zuordnungsmittel (CPUDB, MEMDB) zur Zuordnung einer gemeinsamen Teilnehmernummer (GRPNR) zu der Endgerätegruppe (GRP) ausgestaltet sind,
- dass die Vorrichtung Verwaltungsmittel (CPUDB, MEMDB) zur Verwaltung eines dem ersten Endgerät (M1) zugeordneten ersten Kennzeichners (ID1) und eines dem zumindest einen zweiten Endgerät (M2) zugeordneten zweiten Kennzeichners (ID2) aufweist und
- dass die Vorrichtung Auswertemittel (CPUDB, MEMDB) zur Auswertung des ersten und des zumindest einen zweiten Kennzeichners (ID1, ID2) beim Aufbau von Ruf-Verbindungen (C11, C12, C13) über das Telekommunikationsnetz (NET) zwischen dem ersten Endgerät (M1) beziehungsweise dem zumindest einen zweiten Endgerät (M2) und den Kommunikationspartner-Endgeräten (KPM1, KPM2, KPM3) aufweist.

13. Programm-Modul für eine Vorrichtung (DB) eines Mobilfunk-Telekommunikationsnetzes (NET) zur Verwaltung von eines ersten und zumindest eines zweiten Mobilfunk-Endgeräts (M1, M2), die über das Mobilfunk-Telekommunikationsnetz (NET) jeweils Verbindungen zu Kommunikationspartner-Endgeräten (KPM1, KPM2, KPM3) aufbauen können, wobei das Programm-Modul Befehlscode aufweist, der durch ein Steuermittel (CPUDB) der Vorrichtung ausgeführt werden kann, **dadurch gekennzeichnet,**
- dass das Programm-Modul Zuordnungsmittel zur Zuordnung des ersten (M1) und des zumindest einen zweiten Endgerätes (M2) zu einer gemeinsamen Mobilfunk-Endgerätegruppe (GRP) aufweist,
- dass die Zuordnungsmittel zur Zuordnung einer gemeinsamen Teilnehmernummer (GRPNR) zu der Endgerätegruppe (GRP) ausgestaltet sind,
- dass das Programm-Modul Verwaltungsmittel zur Verwaltung eines dem ersten Endgerät (M1) zugeordneten ersten Kennzeichners (ID1) und eines dem zumindest einen zweiten Endgerät (M2) zugeordneten zweiten Kennzeichners (ID2) aufweist und
- dass das Programm-Modul Auswertemittel zur Auswertung des ersten und des zumindest einen Kennzeichners (ID1, ID2) beim Aufbau von Ruf-Verbindungen (C11, C12, C13) über das Telekommunikationsnetz (NET) zwischen dem ersten Endgerät (M1) beziehungsweise dem zumindest einen zweiten Endgerät (M2) und den Kommunikationspartner-Endgeräten (KPM1, KPM2, KPM3) aufweist.

14. (Erstes) Mobilfunk-Endgerät (M1), das von einem Mobilfunk-Telekommunikationsnetz (NET) verwaltet wird, über welches das erste Endgerät (M1) und zumindest ein zweites Mobilfunk-Endgerät jeweils Verbindungen zu Kommunikationspartner-Endgeräten (KPM1, KPM2, KPM3) aufbauen können, **dadurch gekennzeichnet, dass** das Endgerät Erkennungsmittel (M1CPU, M1MEM) aufweist, die derart ausgestaltet sind, dass das Endgerät ermitteln kann, dass es zusammen mit dem zumindest einen zweiten Endgerät (M2) einer gemeinsamen Mobilfunk-Endgerätegruppe (GRP) zugeordnet ist, dass das Endgerät Auswertemittel (M1CPU, M1MEM) aufweist, die derart ausgestaltet sind, dass das Endgerät eine der Endgerätegruppe (GRP) zugeordnete gemeinsame Teilnehmernummer (GRPNR) sowie einen dem Endgerät zugeordneten endgerätespezifischen Kennzeichner (ID1) auswerten kann, und dass das Endgerät Rufaufbaumittel (M1TR, M1CPU) aufweist, die derart ausgestaltet sind, dass das Endgerät den Kennzeichner (ID1) beim Aufbau einer Ruf-Verbindung (C11) über das Telekommunikationsnetz (NET) zu einem Kommunikationspartner-Endgerät (KPM1, KPM2, KPM3) auswerten kann.

15. Programm-Modul für ein (erstes) Mobilfunk-Endgerät, das von einem Mobilfunk-Telekommunikationsnetz (NET) verwaltet wird, über welches das erste Endgerät (M1) und zumindest ein zweites Mobilfunk-Endgerät jeweils Verbindungen zu Kommunikationspartner-Endgeräten (KPM1, KPM2, KPM3) aufbauen können, wobei das Programm-Modul Befehlscode aufweist, der durch ein Steuermittel (M1CPU) des Mobilfunk-Endgerätes ausgeführt werden kann, **dadurch gekennzeichnet, dass** das Programm-Modul Erkennungsmittel aufweist, die derart ausgestaltet sind, dass das Programm-Modul ermitteln kann, dass das erste Endgerät (M1) zusammen mit dem zumindest einen zweiten Endgerät (M2) einer gemeinsamen Mobilfunk-Endgerätegruppe (GRP) zugeordnet ist, dass das Programm-Modul Auswertemittel aufweist, die derart ausgestaltet sind, dass das Programm-Modul eine der Endgerätegruppe (GRP) zugeordnete gemeinsame Teilnehmernummer (GRPNR) sowie einen dem ersten Endgerät (M1) zugeordneten endgerätespezifischen Kennzeichner (ID1) auswerten kann, und dass das Programm-Modul Rufaufbaumittel aufweist, die derart ausgestaltet sind, dass das Programm-Modul den Kennzeichner (ID1) beim Aufbau einer Ruf-Verbindung des ersten Endgerätes (M1) über das Telekommunikationsnetz (NET) zu einem Kommunikationspartner-Endgerät (KPM1, KPM2, KPM3) auswerten kann.

16. Identifizierungsmodul für ein (erstes) Mobilfunk-Endgerät, das von einem Mobilfunk-Telekommunikationsnetz (NET) verwaltet wird, über welches das erste Endgerät (M1) und zumindest ein zweites Mobilfunk-Endgerät jeweils Verbindungen zu Kommunikationspartner-Endgeräten (KPM1, KPM2, KPM3) aufbauen können, wobei das Identifizierungsmodul Speichermittel aufweist, die durch das erste Mobilfunk-Endgerät ausgewertet werden können, **dadurch gekennzeichnet, dass** das Identifizierungsmodul eine der Endgerätegruppe (GRP) zugeordnete gemeinsame Teilnehmernummer (GRPNR) sowie einen dem Endgerät zugeordneten endgerätespezifischen Kennzeichner (ID1) aufweist, den das erste Endgerät beim Aufbau einer Ruf-Verbindung über das Telekommunikationsnetz (NET) zu einem Kommunikationspartner-Endgerät (KPM1, KPM2, KPM3) auswerten kann und anhand dessen das erste Endgerät ermitteln kann, dass es zusammen mit dem zumindest einen zweiten Endgerät (M2) einer gemeinsamen Mobilfunk-Endgerätegruppe (GRP) zugeordnet ist.

17. Vermittlungsstelle mit einer Vorrichtung nach Anspruch 12.

18. Basis-Station mit einer Vorrichtung nach Anspruch 12.

19. Speichermedium, insbesondere computerlesbare Diskette, mit einem Programm-Modul nach Anspruch 13 und/oder einem Programm-Modul nach Anspruch 15.
